# EUROPÄISCHE PATENTSCHRIFT

(11) **EP 2 371 216 B1**
(45) Veröffentlichungstag und Bekanntmachung des Hinweises auf die Patenterteilung: **12.12.2012**
(21) Anmeldenummer: 11450047.3
(22) Anmeldetag: 01.04.2011
(51) Int. Cl.: A01N 1/02, C12N 5/00, A01N 37/44, A01N 43/36

(54) **Verfahren zum Konservieren von Fettgewebe**
Method for preserving fatty tissue
Procédé de conservation de tissu adipeux

(30) Priorität: 01.04.2010 AT 5272010
(43) Veröffentlichungstag der Anmeldung: 05.10.2011
(73) Patentinhaber: Heinrich, Karl Georg, 1010 Wien (AT)
(72) Erfinder: Heinrich, Karl Georg, 1010 Wien (AT)
(74) Vertreter: Sonn & Partner Patentanwälte

(56) Entgegenhaltungen:
- WO-A1-94/16647
- FR-A1- 2 790 641
- US-A1- 2005 025 755
- KLEIN J A: "Tumescent Technique for Regional Anesthesia Permits Lidocaine Doses of 35 mg/kg for Liposuction", THE JOURNAL OF DERMATOLOGIC SURGERY AND ONCOLOGY, ELSEVIER SCIENCE INC, Bd. 16, 1. März 1990 (1990-03-01), Seiten 248-263, XP009149012, ISSN: 0148-0812
- CRAIG STEFAN B ET AL: "The Antibacterial Effects of Tumescent Liposuction Fluid", PLASTIC AND RECONSTRUCTIVE SURGERY, WILLIAMS AND WILKINS CO., BALTIMORE, MD, US, Bd. 103, 1. Januar 1999 (1999-01-01), Seiten 666-670, XP009148961, ISSN: 0032-1052
- SCHMIDT R M ET AL: "Antimicrobial Activity of Local Anesthetics Lidocaine and Procaine", JOURNAL OF INFECTIOUS DISEASES, UNIVERSITY OF CHICAGO PRESS, CHICAGO, IL, Bd. 121, 1. Juni 1970 (1970-06-01), Seiten 597-607, XP009148962, ISSN: 0022-1899
- FAZLY BAZAR B S ET AL: "Local anaethetics as antimicrobial agents : structure-action considerations", MICROBIOS, CAMBRIDGE, GB, Bd. 37, 1. Januar 1983 (1983-01-01), Seiten 45-64, XP009149020, ISSN: 0026-2633
- JOHNSON SVENA M ET AL: "Local anesthetics as antimicrobial agents: a review", SURGICAL INFECTIONS, MARY ANN LIEBERT, LARCHMONT, NY, US, Bd. 9, Nr. 2, 1. April 2008 (2008-04-01), Seiten 205-213, XP009148578, ISSN: 1096-2964
- Jeffrey A Klein: "Chapter 17: Pharmacology of Lidocaine" In: "Tumescent Technique - Tumescent Anesthesia & Microcannular Liposuction", 1 January 2000 (2000-01-01), Mosby-Elsevier Science, St. Louis, Missouri, U.S.A., XP55025662, ISBN: 978-0-81-515205-7 pages 124-130,

## Beschreibung

Die gegenständliche Erfindung betrifft Verfahren zum mikrobiellen Konservieren von menschlichem oder tierischem Fettgewebe.

Heutzutage stehen in der kosmetischen Chirurgie mehrere Verfahren zur Verfügung, um Körperkonturen zu formen bzw. Defekte in den Konturen adäquat zu glätten. Hier bieten sich zum Beispiel verschiedene Lappenplastiken, die Implantation von synthetischen Materialien, das Einbringen von Fettgewebs- oder Dermisstücken oder das Unterspritzen mittels Fettgewebe, welches durch Liposuktion (Fettabsaugung) gewonnen werden kann, an. Insbesondere das Unterspritzen mittels körpereigenem Fettgewebe stellt eine durchaus interessante Möglichkeit dar, Weichgewebsdefekte effizient zu behandeln, da körpereigenes Fettgewebe und keine synthetischen oder nicht vom Menschen stammende Mittel eingesetzt werden.

Ein wichtiger Aspekt bei der Fetttransplantation ist die Hygiene und die Gefahr von Kontaminationen, insbesondere wenn man bedenkt, dass das abgesaugte Fettgewebe erst Stunden später dem Patienten appliziert wird. Um die Gefahr derartiger Kontaminationen zu reduzieren und um das entnommene Fettgewebe zu konservieren und zu stabilisieren, können antimikrobielle Substanzen eingesetzt werden. Problematisch ist dabei die Dosierung. Es ist dabei meist eine Gratwanderung zwischen Verträglichkeit (z.B. Reduktion der Nebenreaktionen) und Effizienz.

Klein (J. Dermatol. Surg. Oncol. 16 (1990): 248-263) beschreibt die Tumeszenz-Technik zur Fettabsaugung. Dabei wird eine größere Menge einer Lösung von Lidocain, Epinephrin und Natriumhydrogencarbonat in physiologischer Kochsalzlösung in das Fettgewebe eingespritzt.

WO 94/16647 A1 beschreibt die Verwendung von autologem Fettgewebe zum Remodellieren der Körperform eines Menschen. Das Fettgewebe wird durch Liposuktion gewonnen. Als Tumeszenzlösung wird eine Lidocain-haltige Lösung verwendet. Um bei der Aufarbeitung und Reinigung des Fettgewebes sterile Bedingungen zu schaffen, wird dem Fettgewebe ein antimikrobielles Mittel, z.B. eine Mischung aus Clindamycin und einem weiteren Wirkstoff, zugegeben.

Craig et al. (Plastic Reconstr. Surg. 103 (1999): 666-670) beschreibt die antibakteriellen Effekte von Lidocain, Epinephrin und Natriumhydrogencarbonat, den hauptsächlichen Inhaltsstoffen von Klein's Standard Tumeszenzlösung. Es konnte gezeigt werden, dass die Mindesthemmkonzentration von Lidocain für Bakterien bei mindestens 0.5% liegt.

Schmidt et al. (J. Infect. Dis. 121 (1970): 597-607) beschreibt die antimikrobielle Aktivität der Lokalanästhetika Lidocain und Procain. Die Tabellen 1 und 4 zeigen, dass für eine breite Wirksamkeit von Lidocain gegen Bakterien eine Konzentration von mindestens 2% an Wirkstoff vorliegen muss.

Fazly Bazaz et al. (Microbios 37 (1983): 45-64) zeigt, dass für eine antibakterielle Wirkung von Lidocain eine hohe Konzentration vorliegen muss.

FR 2 790 641 A1 beschreibt eine Flüssigkeit umfassend Lincomycin zur Konservierung von humanem oder tierischem Gewebe.

US 2005/025755 A1 offenbart ein Verfahren zur autologen Transplantation von Fettgewebe. Das Fettgewebe wird zunächst durch Liposuktion gewonnen, wobei eine Lidocain-haltige Tumeszenzlösung verwendet wird. Das Fettgewebe wird dann aufbereitet und an der Zielposition implantiert.

Es ist Aufgabe der vorliegenden Erfindung ein Verfahren zur Verfügung zu stellen um Fettgewebe, welches aus einem tierischen oder menschlichen Körper gewonnen wird, einerseits mikrobiell zu konservieren und andererseits die Verwendbarkeit zur Transplantation des Fettgewebes zu gewährleisten.

Dieses Ziel wird durch ein Verfahren zum mikrobiellen Konservieren von menschlichem oder tierischem Fettgewebe, wobei dem isolierten Fettgewebe 2-Diethylamino-N-(2,6-dimethylphenyl)acetamid (Lidocain) in einer Konzentration von 1 µg bis 200 µg pro ml Fettgewebe zugesetzt wird, erreicht.

Es hat sich überraschenderweise herausgestellt, dass Lidocain in Fettgewebe bereits bei einer Konzentration von 1 µg pro ml Fettgewebe seine antimikrobielle Wirkung entfaltet. Zusätzlich zeigte sich, dass Lidocain ab einer bestimmten Konzentration zu unerwünschten Nebenreaktionen führen kann, die vermeidbar wären, wenn die Lidocain-Konzentration im Fettgewebe maximal 200 µg pro ml Fettgewebe betragen würde.

Lidocain wird üblicherweise in der Human- und Veterinärmedizin in Form seines Hydrochloridsalzes als gut und schnell wirksames örtliches Betäubungsmittel häufig eingesetzt (Lokalanästhesie). Hierzu wird Lidocain entweder in das Gewebe eingespritzt (Infiltrationsanästhesie), um so ein kleineres Areal zu betäuben, wie es für die Naht einer Platzwunde oder ähnliche kleinere Eingriffe notwendig ist. Alternativ wird es in den Bereich eines Nervs gespritzt, um so dessen Versorgungsgebiet zu betäuben (Leitungsanästhesie).

Lidocain blockiert spannungsabhängige Natrium-Kanäle in den Zellmembranen von Nervenzellen. Wenn sensible Rezeptoren auf der Haut die Empfindung von Druck, Schmerz, Wärme, Kälte etc. an das Gehirn weiterleiten sollen, wird die Erregungsweiterleitung über die Nervenzellen blockiert, da kein Natrium in die Nervenzelle einströmen kann und so die Entstehung eines Aktionspotenzials erschwert wird. Lidocain wirkt bei Injektion unter die Haut oder bei Auftragung als Salbe nur an den sich dort befindlichen Nervenzellen. Dünne Nervenfasern werden früher in ihrer Weiterleitung blockiert als dicke. Daraus ergibt sich folgende Reihenfolge des Funktionsausfalls: Schmerz - Temperatur - Berührung - Druck - und zuletzt Efferenzen. Zusätzlich kann Lidocain allergische Reaktionen auslösen. Durch die Applikation geringer Dosen, wie im vorliegenden Fall, werden diese Nebenwirkungen effektiv unterdrückt, ohne jedoch das antimikrobielle Potenzial von Lidocain zu beeinträchtigen.

Lidocain wird vorzugsweise nach durchgeführter Fettabsaugung zugegeben.

Verfahren zur Synthese von Lidocain sind im Stand der Technik hinreichend bekannt (siehe z.B. Reilly TJ (1999) J. Chem. Ed. 76 (11):1557).

Moore J.H. et al (Aesth. Plast. Surg. 19 (1995): 335-339) untersuchten den Einfluss einer lokalen Anästhesie mit Lidocain auf die Lebensfähigkeit der im Fettgewebe vorhandenen Adipozyten im Zuge einer Fettabsaugung. Dabei wurde festgestellt, dass Lidocain ein starker Inhibitor der Lipolyse in vitro ist.

In der US 2005/025755 werden Verfahren zur Behandlung von Patienten mit Eigenfett geoffenbart. Dabei wird unter anderem Lidocain als lokales Anästhetikum verabreicht.

Gemäß einer bevorzugten Ausführungsform wird dem Fettgewebe Lidocain in einer Konzentration von 5 µg bis 150 µg pro ml Fettgewebe, vorzugsweise in einer Konzentration von 10 µg bis 100 µg pro ml Fettgewebe, zugesetzt.

Um die Stabilität des Fettgewebes noch weiter zu erhöhen, können dem Fettgewebe zusätzliche antimikrobielle Substanzen, wie Substanzen aus der Gruppe der Lincosamide, insbesondere Clindamycin und Lincomycin, oder vergleichbare Antibiotika, zugesetzt werden. Die Zugabe weiterer antimikrobieller Substanzen hat den Vorteil, die antimikrobielle Wirkung von Lidocain weiter zu verstärken.

Gemäß einer weiteren bevorzugten Ausführungsform der vorliegenden Erfindung wird Clindamycin und/oder Lincomycin in einer Konzentration von 0,1 bis 10 mg pro ml Fettgewebe, vorzugsweise in einer Konzentration von 0,5 bis 2 mg pro ml Fettgewebe, insbesondere in einer Konzentration von 1 mg pro ml Fettgewebe, zugesetzt.

Die vorliegende Erfindung wird ferner anhand der folgenden Beispiele eingehender erläutert.

### BEISPIELE:

### Beispiel 1: Antimikrobielle Wirksamkeit von Lidocain bzw. Clindamycin in Fettgewebe

In diesem Beispiel wird die antimikrobielle Wirkung von Lidocain in menschlichem Fettgewebe untersucht. Dazu wurde durch Fettabsaugung gewonnenes menschliches Fettgewebe, das verschiedene Konzentrationen an Lidocain enthielt zur Unterspritzung bei kosmetischen Kontur-Korrekturen verwendet. Obwohl rein statistisch gesehen etwa 2-10 Infektionsfälle pro 100 Fettgewebsimplatationen zu erwarten wären, kam es bei mehreren tausend Eingriffen dieser Art zu keiner einzigen Infektion, wenn Lidocain in einer Konzentration zwischen 1 und 400 µg pro ml Fettgewebe zugesetzt wurde. Ebenso kam es zu keinen Infektionen, wenn Lidocain und Clindamycin zugesetzt wurden.

Um die antimikrobielle Wirksamkeit von Lidocain zu belegen, insbesondere um festzustellen, ab welchen Konzentration Lidocain seine Wirksamkeit in Fettgewebe zeigt, wurden weitere Versuche durchgeführt. Im Zuge von etwa 500 Eingriffen wurde reines unbehandeltes Fettgewebe und Fettgewebe mit 0,1, 0,5 und 1 µg Lidocain pro ml Fettgewebe Patienten injiziert. Es hat sich gezeigt, dass es bei der Verwendung von reinem unbehandelten Fettgewebe zu den statistisch zu erwartenden Infektionsfällen kommt. Auch bei Verwendung von geringen Lidocain-Konzentrationen konnte das Fettgewebe nicht ausreichend mikrobiologisch stabilisert werden, so dass es auch bei 0,1 und 0,5 µg Lidocain pro ml Fettgewebe zu denselben Infektionsraten wie bei Verabreichung von unbehandeltem Fettgewebe kommen kann. Wurde hingegen Fettgewebe bei Implantationen verwendet, welches 1 µg Lidocain pro ml Fettgewebe aufwies, konnte bei keinem Patienten eine Infektion festgestellt werden.

### Beispiel 2: Nebenreaktionen, welche durch Lidocain in Fettgewebe hervorgerufen werden

Es ist bekannt, dass Lidocain verschiedenste Nebenwirkungen aufweist. Insbesondere kann Lidocain Störungen des zentralen Nervensystems (z.B. Krampfanfälle), des Herzens (z.B. Herzrhythmusstörungen), Blutdruckabfall und allergische Reaktionen hervorrufen. Bei der Transplantation von Fettgewebe ist insbesondere das Auftreten von allergischen Reaktionen problematisch, bei denen es zu neurologischen Reaktionen kommt, die sich schlagartig unter Cortisongabe bessern. Um festzustellen, welcher Konzentrationsbereich zu allergischen Reaktionen führt, wurden verschiedenste Konzentrationen getestet.

Dabei wurde festgestellt, daß eine Lidocainallergie offenbar nur in seltenen Ausnahmefällen auftritt. So kam es zu keiner einzigen allergischen Reaktion, wenn Lidocain in einer Konzentration zwischen 1 und 200 µg pro ml Fettgewebe eingesetzt wurde. Jedoch zeigte sich, dass ab 250 µg Lidocain pro ml Fettgewebe die Anzahl der Patienten, die die Symptome einer Lidocainallergie aufwiesen (u.a. neurologische Symptome), stetig zunahm.

Diese Daten belegen, dass Fettgewebe mit Lidocain in einer Konzentration ab 200 µg pro ml Fettgewebe keine signifikanten allergischen Nebenreaktionen auszulösen vermag.

## Patentansprüche

1. Verfahren zum mikrobiellen Konservieren von menschlichem oder tierischem Fettgewebe, wobei dem isolierten Fettgewebe 2-Diethylamino-N-(2,6-dimethylphenyl)acetamid (Lidocain) in einer Konzentration von 1 µg bis 200 µg pro ml Fettgewebe zugesetzt wird.

2. Verfahren nach Anspruch 1, **dadurch gekennzeichnet, dass** dem Fettgewebe Lidocain in einer Konzentration von 5 µg bis 150 µg pro ml Fettgewebe, zugesetzt wird.

3. Verfahren nach Anspruch 1, **dadurch gekennzeichnet, dass** dem Fettgewebe Lidocain in einer Konzentration von 10 µg bis 100 µg pro ml Fettgewebe zugesetzt wird.

4. Verfahren nach einem der Ansprüche 1 bis 3, **dadurch gekennzeichnet, dass** dem Fettgewebe zusätzlich weitere antimikrobielle Substanzen zugesetzt werden.

5. Verfahren nach einem der Ansprüche 1 bis 3, **dadurch gekennzeichnet, dass** dem Fettgewebe zusätzlich weitere antimikrobielle Substanzen aus der Gruppe der Lincosamide zugesetzt werden.

6. Verfahren nach einem der Ansprüche 1 bis 3, **dadurch gekennzeichnet, dass** dem Fettgewebe zusätzlich Clindamycin und/oder Lincomycin zugesetzt wird.

7. Verfahren nach Anspruch 6, **dadurch gekennzeichnet, dass** Clindamycin und/oder Lincomycin in einer Konzentration von 0,1-10 mg pro ml Fettgewebe zugesetzt wird.

## Claims

1. A method for microbial conservation of human or animal fatty tissue, wherein 2-diethylamino-N-(2,6-dimethylphenyl)acetamide (lidocaine) is added to the isolated fatty tissue at a concentration of 1 µg to 200 µg per ml of fatty tissue.

2. The method according to claim 1, **characterized in that** lidocaine is added to said fatty tissue at a concentration of 5 µg to 150 µg per ml of fatty tissue.

3. The method according to claim 1, **characterized in that** lidocaine is added to said fatty tissue at a concentration of 10 µg to 100 µg per ml of fatty tissue.

4. The method according to any of claims 1 to 3, **characterized in that** further antimicrobial substances are additionally added to said fatty tissue.

5. The method according to any of claims 1 to 3, **characterized in that** further antimicrobial substances from the group of lincosamides are additionally added to said fatty tissue.

6. The method according to any of claims 1 to 3, **characterized in that** clindamycin and/or lincomycin are additionally added to said fatty tissue.

7. The method according to claim 6, **characterized in that** clindamycin and/or lincomycin is added at a concentration of 0.1-10 mg per ml of fatty tissue.

## Revendications

1. Procédé pour la conservation microbienne de tissu adipeux humain ou animal, où au tissu adipeux isolé est ajouté du 2-diéthylamino-N-(2,6-diméthylphényl)acétamide (lidocaïne) en une concentration de 1 µg à 200 µg par ml de tissu adipeux.

2. Procédé selon la revendication 1, **caractérisé en ce qu'**au tissu adipeux est ajoutée de la lidocaïne en une concentration de 5 µg à 150 µg par ml de tissu adipeux.

3. Procédé selon la revendication 1, **caractérisé en ce qu'**au tissu adipeux est ajoutée de la lidocaïne en une concentration de 10 µg à 100 µg par ml de tissu adipeux.

4. Procédé selon l'une des revendications 1 à 3, **caractérisé en ce qu'**au tissu adipeux sont ajoutées en outre d'autres substances anti-microbiennes.

5. Procédé selon l'une des revendications 1 à 3, **caractérisé en ce qu'**au tissu adipeux sont ajoutées en outre d'autres substances anti-microbiennes du groupe des lincosamides.

6. Procédé selon l'une des revendications 1 à 3, **caractérisé en ce qu'**au tissu adipeux est ajoutée en outre de la clindamycine et/ou de la lincomycine.

7. Procédé selon la revendication 6, **caractérisé en ce que** la clindamycine et/ou la lincomycine est ajoutée en une concentration de 0,1-10 mg par ml de tissu adipeux.
